# EUROPÄISCHE PATENTSCHRIFT

(11) **EP 3 615 803 B1**
(45) Veröffentlichungstag und Bekanntmachung des Hinweises auf die Patenterteilung: **10.11.2021**
(21) Anmeldenummer: 18719903.9
(22) Anmeldetag: 27.04.2018
(51) Int. Cl.: B32B 37/12, B32B 38/18, F04B 39/12, F04B 39/02

(54) **KÄLTEMITTELVERDICHTER**
REFRIGERANT COMPRESSOR
COMPRESSEUR RÉFRIGÉRANT

(30) Priorität: 28.04.2017 AT 5007817 U
(43) Veröffentlichungstag der Anmeldung: 04.03.2020
(73) Patentinhaber: Secop GmbH, 24939 Flensburg (DE)
(72) Erfinder: SCHWEIGHOFER, Alfred, 8292 Neudau (AT); KRISPEL, Wilhelm, 8280 Fürstenfeld (AT)
(74) Vertreter: KLIMENT & HENHAPEL
(86) Internationale Anmeldenummer: PCT/EP2018/060876
(87) Internationale Veröffentlichungsnummer: WO 2018/197669

(56) Entgegenhaltungen:
- WO-A1-2008/052297
- CN-A- 102 720 659
- US-A1- 2010 092 316
- US-A1- 2012 100 020

## Beschreibung

### GEBIET DER ERFINDUNG

Die Erfindung betrifft einen Kältemittelverdichter mit einem, vorzugsweise hermetisch abdichtbaren, Verdichtergehäuse; einer elektrischen Antriebseinheit umfassend einen Rotor und einen Stator; einer mit dem Rotor drehfest verbundenen, eine Längsachse aufweisenden Kurbelwelle und einer von der Kurbelwelle antreibbaren Kolben-Zylinder-Einheit.

### STAND DER TECHNIK

Kältemittelverdichter, insbesondere hermetisch gekapselte Kältemittelverdichter, sind seit langem bekannt und kommen vorwiegend in Kühlmöbeln wie Kühlschränken oder -regalen zum Einsatz. Der Kältemittelprozess als solches ist ebenfalls seit langem bekannt. Kältemittel wird dabei durch Energieaufnahme aus dem zu kühlenden Raum in einem Verdampfer erhitzt und schließlich überhitzt und mittels des Kältemittelverdichters, auch Kältemittelkompressor genannt, durch eine Kolben-Zylinder-Einheit durch einen sich in einem Zylindergehäuse translatorisch bewegenden Kolben auf ein höheres Druckniveau gepumpt, wo das Kältemittel Wärme über einen Kondensator abgibt und über eine Drossel, in der eine Druckreduzierung und die Abkühlung des Kältemittels erfolgt, wieder zurück in den Verdampfer befördert wird. Die Bewegung des Kolbens wird über einen von einer elektrischen Antriebseinheit angetriebenen Kurbeltrieb umfassend eine Kurbelwelle realisiert.

Die elektrische Antriebseinheit umfasst einen Stator, der in der Regel aus einem Blechpaket und Drahtwicklungen gebildet wird, und einen Rotor, der in der Regel eine Mehrzahl an Permanentmagneten umfasst, wobei der Rotor drehfest, also form-, reib oder stoffschlüssig mit dem Kurbeltrieb, insbesondere mit der Kurbelwelle, verbunden ist, um die Kolben-Zylinder-Einheit anzutreiben. Üblicherweise ist die Antriebseinheit entweder als Asynchronmotor ausgebildet, wobei der Stator aus Blechpacket und/oder Kupfer- oder Aluminiumdraht-wicklungen besteht und der Rotor aus Blechpaket und Aluminiumstegen mit Aluminiumkurzschlussringen, oder als Synchronmotor ausgebildet, wobei der Stator ein Blechpaket und/oder Kupfer- oder Aluminiumdrahtwicklungen umfasst und der Rotor eine Mehrzahl an Permanentmagneten umfasst..

Um die Kolben-Zylinder-Einheit und den Kurbeltrieb, insbesondere die Kurbelwelle, während des Betriebs zu schmieren, ist ein Schmiermittel-Fördersystem vorgesehen, mittels dessen während des Betriebs des Kältemittelverdichters Schmiermittel aus einem sich in einem Bodenbereich des Verdichtergehäuses während des Betriebszustandes ausbildenden Schmiermittelsumpf in Richtung der Kolben-Zylinder-Einheit gefördert wird.

Das Schmiermittel-Fördersystem ist im Allgemeinen zumindest teilweise durch die Kurbelwelle selbst ausgebildet, wobei die Kurbelwelle an dem der Kolben-Zylinder-Einheit gegenüberliegenden Ende, vorzugsweise an einer Stirnfläche der Kurbelwelle, zumindest eine axiale Bohrung und/oder eine Exzenterbohrung aufweist, durch welche Schmiermittel aufgrund der Zentrifugalkraft bei der Rotation der Kurbelwelle in Richtung der Kolben-Zylinder-Einheit gefördert wird. Zusätzlich dazu oder alternativ dazu weist die Kurbelwelle oftmals eine an der Umfangsfläche in einem Mittelabschnitt ausgebildete Wendelnut auf, welche das Schmiermittel an der Umfangsfläche nach oben fördert und mit der axialen Bohrung und/oder der Exzenterbohrung verbunden ist.

Ein Nachteil des Stands der Technik äußert sich darin, dass durch die zu überwindende Förderhöhe des Schmiermittels, insbesondere beim Abgreifen des Schmiermittels aus dem Schmiermittelsumpf, die gesamte Förderleistung des Schmiermittel-Fördersystems verringert wird. Diese Reduktion der Förderleistung resultiert aus der mit zunehmender Förderhöhe abnehmenden Menge an Schmiermittel die mittels einer auf der Zentrifugalkraft basierenden Förderung gefördert werden kann.

Beispielsweise zeigt die US 2012/010020 A1 einen hermetischen Kältemittelverdichter mit einem Ölfördersystem, wobei ein Befestigungsabschnitt der Schmiermittelaufnahme auf die Kurbelwelle aufgepresst ist, wobei sich Befestigungsabschnitt und Rotor abschnittsweise überlappen.

### AUFGABE DER ERFINDUNG

Es ist daher eine Aufgabe der gegenständlichen Erfindung die Nachteile des Stands der Technik zu überwinden und einen Kältemittelverdichter vorzuschlagen, der eine erhöhte Förderleistung von Schmiermittel aus einem Schmiermittelsumpf ermöglicht bei vorzugsweise geringer bzw. reduzierter Bauhöhe des Kompressors.

### DARSTELLUNG DER ERFINDUNG

Um Schmiermittel in eine parallel zu einer Längsachse der Kurbelwelle oder geneigt zur Längsachse verlaufenden Bohrung, vorzugsweise eine exzentrisch zur Längsachse angeordnete Exzenterbohrung, der Kurbelwelle einzuführen, ohne dass das der Kolben-Zylinder-Einheit gegenüberliegende Ende der Kurbelwelle weit über den Rotor vorsteht und ohne dass das der Kolben-Zylinder-Einheit gegenüberliegende Ende der Kurbelwelle in den Schmiermittelsumpf eintaucht, ist eine hülsenförmige Schmiermittelaufnahme am Ende der Kurbelwelle angeordnet. Dabei weist die Schmiermittelaufnahme einen Befestigungsabschnitt auf, über welchen die Schmiermittelaufnahme an der Kurbelwelle, vorzugsweise drehfest, also form-, reib oder stoffschlüssig, befestigt ist. Durch die Befestigung an der Kurbelwelle rotiert die Schmiermittelaufnahme im Betriebszustand gemeinsam mit der Kurbelwelle.

Die hülsenförmige Schmiermittelaufnahme taucht im Betriebszustand in den Ölsumpf ein, wobei Schmiermittel, beispielsweise über eine Schmiermitteleintrittsöffnung, in die Schmiermittelaufnahme eintreten kann. Üblicher Weise ist die Schmiermittelaufnahme aus einem metallischen Werkstoff oder aus einem Kunststoff hergestellt. Durch die Hülsenform der Schmiermittelaufnahme, also die Ausbildung der Schmiermittelaufnahme als Hohlkörper in dem Schmiermittel aufgenommen werden kann, wird in der Schmiermittelaufnahme befindliches Schmiermittel durch die Zentrifugalkraft an die Innenwand der Schmiermittelaufnahme gedrückt, wodurch der Druck steigt und das Schmiermittel in Richtung des Endes der Kurbelwelle gefördert wird. Dabei bildet sich typischer Weise innerhalb der Schmiermittelaufnahme eine Schmiermittelparabel bzw. eine paraboloidförmige Schmiermittelsäule aus.

Um trotz der Befestigung der Schmiermittelaufnahme an der Kurbelwelle die vom Schmiermittel zu überwindende Förderhöhe zu verringern und damit die Förderleistung zu erhöhen, ist vorgesehen, dass der Befestigungsabschnitt der Schmiermittelaufnahme zumindest abschnittsweise zwischen dem Rotor und der Kurbelwelle angeordnet ist. In anderen Worten überlappen sich der Befestigungsabschnitt, die Kurbellwelle und der Rotor zumindest abschnittsweise. Durch die derartige Befestigung der Schmiermittelaufnahme im Bereich des Rotors kann einerseits der Abstand zwischen Rotor und Ölsumpf gesenkt werden, was eine verbesserte Ölförderung und eine erhöhte Förderleistung bedingt. Durch die höhere Förderleistung lässt sich auch bei geringeren Drehzahlen eine ausreichende Schmierung der Kolben-Zylinder-Einheit gewährleisten, sodass der Kältemitteverdichter möglichst energieoptimiert betrieben werden kann. Andererseits kann der über den Rotor hinausragende Abschnitt der Kurbelwelle reduziert werden, was sowohl Materialeinsparungen als auch eine Reduktion der Förderhöhe bedingt und gleichzeitig eine Verringerung der gesamten Bauhöhe des Kältemittelkompressors ermöglicht.

Die eingangs gestellte Aufgabe wird in einem erfindungsgemäßen Kältemittelverdichter daher dadurch gelöst, dass an einem der Kolben-Zylinder-Einheit gegenüberliegenden Ende der Kurbelwelle eine hülsenförmige Schmiermittelaufnahme zur zentrifugischen Förderung von Schmiermittel aus einem in einem Bodenbereich des Verdichtergehäuses ausgebildeten Schmiermittelsumpf in Richtung der Kolben-Zylinder-Einheit angeordnet ist, wobei die hülsenförmige Schmiermittelaufnahme einen Befestigungsabschnitt aufweist, mittels welchem Befestigungsabschnitt die Schmiermittelaufnahme an der Kurbelwelle, vorzugsweise drehfest, befestigt ist, wobei der Befestigungsabschnitt der hülsenförmigen Schmiermittelaufnahme in radialer Richtung bezogen auf die Längsachse der Kurbelwelle zumindest abschnittsweise zwischen der Kurbelwelle und dem Rotor angeordnet ist.

In einer Ausführungsvariante der Erfindung ist vorgesehen, dass eine Innenfläche des Befestigungsabschnitts der hülsenförmigen Schmiermittelaufnahme eine Umfangsfläche der Kurbelwelle kontaktiert und dass eine Außenfläche des Befestigungsabschnitts der hülsenförmigen Schmiermittelaufnahme eine Innenfläche des Rotors kontaktiert. Dadurch, dass der Befestigungsabschnitt sowohl die Kurbelwelle als auch einen Abschnitt des Rotors unmittelbar kontaktiert, wird der Radius der Schmiermittelaufnahme maximiert. Zusätzlich reduziert sich die Anzahl der Montageschritte bei der Montage von Kurbelwelle, Rotor und Schmiermittelaufnahme. Die Innenfläche des Rotors kann dabei beispielsweise von einer, vorzugsweise zentrisch angeordneten, Durchgangsöffnung ausgebildet sein.

Eine weitere Ausführungsvariante des erfindungsgemäßen Kältemittelverdichters sieht vor, dass der Befestigungsabschnitt der hülsenförmigen Schmiermittelaufnahme zwischen Rotor und Kurbelwelle drehfest fixiert ist. Die drehfeste Fixierung sichert das Mitdrehen der Schmiermittelaufnahme mit der Kurbelwelle. Durch die Fixierung zwischen Rotor und Kurbelwelle kann ein Verrutschen der Schmiermittelaufnahme verhindert werden, wobei keine zusätzlichen Fixiermittel notwendig sind. Beispielsweise kann der Befestigungsabschnitt zwischen Rotor und Kurbelwelle geklemmt sein oder durch die Aufbringung des Rotors plastisch verformt werden. Es ist auch denkbar, dass der Befestigungsabschnitt auf die Kurbelwelle aufgeschrumpft oder aufgepresst ist und der Rotor zumindest abschnittsweise auf den Befestigungsabschnitt aufgepresst oder aufgeschrumpft ist. Um die Förderleistung zu maximieren und die durch die Befestigung des Befestigungsabschnitts an der Kurbelwelle bedingte Erhöhung der Förderhöhe zu minimieren ist gemäß einer weiteren Ausführungsvariante vorgesehen, dass eine Überlappung von Rotor und Befestigungsabschnitt in axialer Richtung bezogen auf die Längsachse mehr als 50%, vorzugsweise mehr als 75%, insbesondere zwischen 75% und 100%, der axialen Erstreckung des Befestigungsabschnitts bezogen auf die Längsachse beträgt. Denkbar sind dabei beispielsweise auch Überlappungen von 60%, 70%, 80%, 85%, 90% oder 95%.

Gemäß einer bevorzugten Ausführungsvariante der Erfindung ist vorgesehen, dass die hülsenförmige Schmiermittelaufnahme eine rotationssymmetrische Form bezogen auf die Längsachse aufweist, wobei der Durchmesser des Befestigungsabschnitts größer oder zumindest gleich groß ist wie der Durchmesser eines Aufnahmeabschnitts der Schmiermittelaufnahme. Die rotationssymmetrische Form verringert den Strömungswiderstand des im Betriebszustand im Schmiermittelsumpf angeordneten Aufnahmeabschnitts bei der Rotation der Kurbelwelle. Die Wahl des Durchmessers des Befestigungsabschnitts erleichtert die Anbindung des Befestigungsabschnitts an die Kurbelwelle, da auch die Kurbelwelle, zumindest im Bereich eines Endabschnitts, rotationssymmetrisch ausgebildet ist. Ist der Durchmesser des Befestigungsabschnitts größer als der des Aufnahmeabschnitts, lässt sich der Durchmesser des Aufnahmeabschnitts an den Durchmesser der Kurbelwelle anpassen, um eine verbesserte Ölförderung zu erreichen.

In einer weiteren Ausführungsvariante des erfindungsgemäßen Kältemittelverdichters ist vorgesehen, dass sich der Befestigungsabschnitt der hülsenförmigen Schmiermittelaufnahme parallel zur Längsachse erstreckt und dass die hülsenförmige Schmiermittelaufnahme einen an den Befestigungsabschnitt anschließenden, sich radial zur Längsachse nach außen erstreckenden Kragenabschnitt aufweist, wobei der Kragenabschnitt vorzugsweise am Rotor anliegt. Während sich der Befestigungsabschnitt parallel zur Längsachse erstreckt, also in anderen Worten eine kreiszylindrische Hülse ausbildet, um eine einfache Montage zu ermöglichen, verhindert der Kragenabschnitt, dass sich die Schmiermittelaufnahme in axialer Richtung, also parallel zur Längsachse, verschiebt, indem der Kragenabschnitt entweder an einer Lagerhülse der Kurbelwelle oder am Rotor ansteht. Gleichzeitig kann der Kragenabschnitt auch als Anschlag für die Montage des Rotors dienen. Jedenfalls ist es vorteilhaft für die Positionierung von Rotor, Kurbelwelle und Schmiermittelaufnahme bei der Montage, wenn der Kragenabschnitt am Rotor, beispielsweise an einer der Kolben-Zylinder-Einheit zugewandten Oberseite des Rotors oder einer der Kolben-Zylinder-Einheit zugewandten Fläche des Rotors, anliegt.

Um die Befestigung des Rotors an der Kurbelwelle zu verbessern, ist in einer weiteren bevorzugten Ausführungsvariante der Erfindung vorgesehen, dass der Befestigungsabschnitt der hülsenförmigen Schmiermittelaufnahme zumindest eine, sich vorzugsweise über die gesamte Erstreckung des Befestigungsabschnitts parallel zur Längsachse erstreckende, schlitzartige Freistellung aufweist, wobei der Rotor zumindest einen zur Freistellung korrespondierenden Steg aufweist. Der zumindest eine Steg greift dabei in die zumindest eine Freistellung ein, sodass im Bereich der Freistellung der Rotor unmittelbar an der Kurbelwelle anliegt. Somit ist der Rotor abschnittsweise direkt an der Kurbelwelle befestigt, während in den den Befestigungsabschnitt aufweisenden Bereichen der Befestigungsabschnitt als Zwischenlage zwischen Rotor und Kurbelwelle fungiert. Beispielweise kann die Freistellung als eine schlitzartige Ausnehmung oder mehrere schlitzartige Ausnehmungen ausgebildet sein, die in axialer Richtung, also parallel zur Längsachse, vom oberen Ende der Schmiermittelaufnahme bis in den Befestigungsabschnitt verlaufen. Mehrere Freistellungen sind vorzugsweise gleichmäßig über den Umfang des Befestigungsabschnitt verteilt angeordnet.

Eine besonders bevorzugte Ausführungsvariante der Erfindung sieht vor, dass die elektrische Antriebseinheit als Außenläufermotor ausgebildet ist und der Rotor ein sich zumindest abschnittsweise radial zur Längsachse nach außen erstreckendes Trägerelement aufweist, wobei das Trägerelement drehfest an der Kurbelwelle angebunden ist. Durch die Ausführung der Antriebseinheit als Außenläufermotor, bei der der Stator bezogen auf die Längsachse radial innen liegt und der Rotor radial außen angeordnet ist, dient das Trägerelement als Verbindung zwischen den elektromagnetischen Bestandteilen des Rotors, beispielsweise über den Umfang verteilte, durch einen Kurzschlussring miteinander verbundene Permanentmagnete, und der Kurbelwelle, die durch die elektromagnetische Wechselwirkung zwischen Rotor und Stator antreibbar ist. Die Außenläufermotor-Bauform ermöglicht eine besonders niedrige Bauhöhe des Kältemittelverdichters und zeichnet sich durch eine hohe Laufruhe in verschiedenen Drehzahlbereichen aus. Durch die Kombination eines Außenläufermotors mit der erfindungsgemäßen Schmiermittelaufnahme kann eine besonders hohe Ölförderrate erreicht werden bzw. eine ausreichende Ölförderrate bei besonders niedrigen Drehzahlen erreicht werden. Die Durchgangsöffnung kann dabei beispielsweise als durch eine im Biege- oder Tiefziehverfahren hergestellte Ausstülpung eines das Trägerelement ausbildenden Blechteils gebildet sein.

Gemäß einer weiteren besonders bevorzugten Ausführungsvariante ist vorgesehen, dass das Trägerelement eine zentrische Durchgangsöffnung für die Anbindung der Kurbelwelle aufweist, wobei eine Außenfläche des Befestigungsabschnitts der hülsenförmigen Schmiermittelaufnahme eine Wandfläche der Durchgangsöffnung kontaktiert. Durch diese Anordnung von Trägerelement, Befestigungsabschnitt und Kurbelwelle ist eine besonders platzsparende Befestigung von Trägerelement und Schmiermittelaufnahme an der Kurbelwelle möglich, da die Durchgangsöffnung zur Befestigung des Trägerelements an der Kurbelwelle dient und der Befestigungsabschnitt als Zwischenlage zwischen Kurbelwelle und Trägerelement keinen zusätzlichen Bauraum, insbesondere in axialer Richtung, vereinnahmt. Dadurch wird die Förderhöhe des Schmiermittels von einer Oberfläche des Schmiermittelsumpfes bis hin zu einer Radialbohrung zur Schmierung eines Hauptlagers der Kurbelwelle und/oder einer Radialbohrung zur Verbindung mit einer Wendelnut minimiert. Gleichzeitig ist ein Überstand der Kurbelwelle über die Durchgangsöffnung in Richtung des Bodenbereichs des Verdichtergehäuses nicht notwendig bzw. kann drastisch reduziert werden, da der Befestigungsabschnitt der Schmiermittelaufnahme in der Durchgangsöffnung zwischen Rotor und Kurbelwelle angeordnet ist und nicht am Überstand der Kurbelwelle befestigt werden muss.

Um die Flächenpressung zwischen der Wandfläche der Durchgangsöffnung und der Außenfläche des Befestigungsabschnitts der hülsenförmigen Schmiermittelaufnahme sowie die Flächenpressung zwischen der Innenfläche des Befestigungsabschnitts und der Umfangsfläche der Kurbelwelle zu erhöhen und damit die Haltekraft des Befestigungsabschnitts an der Kurbelwelle bzw. des Trägerelements an der Kurbelwelle zu verbessern, ist in einer weiteren besonders bevorzugten Ausführungsvariante der Erfindung vorgesehen, dass die Durchgangsöffnung durch einen hülsenförmigen Fortsatz des Trägerelements ausgebildet ist und dass ein ringförmiges Stützelement auf den hülsenförmigen Fortsatz aufgepresst oder aufgeschrumpft ist. Der hülsenförmige Fortsatz erstreckt sich vorzugsweise auf die der Kolben-Zylinder-Einheit abgewandte Seite des Trägerelements, wobei der hülsenförmige Fortsatz einstückig mit dem Trägerelement ausgebildet ist, beispielsweise mittels eines Umformverfahrens. Das aufgeschrumpfte oder aufgepresste ringförmige Stützelement übt eine radial nach innen in Richtung der Längsachse gerichtete Kraft auf eine äußere Umfangsfläche des Fortsatzes aus, sodass die Klemmkraft bzw. die daraus resultierende Flächenpressung erhöht wird. Dadurch wird sowohl die drehfeste, reib- bzw. kraftschlüssige Anbindung des Trägerelements an die Kurbelwelle als auch die drehfeste, reib- bzw. kraftschlüssige Anbindung der Schmiermittelaufnahme an die Kurbelwelle sichergestellt. Das Stützelement muss sich nicht über die gesamte Erstreckung des Fortsatzes in Richtung der Längsachse erstrecken, eine abschnittsweise Überlappung ist ausreichend, wobei eine Überlappung von zumindest 20%, vorzugsweise mehr als 50%, insbesondere mehr als 75% vorteilhaft ist.

In einer anderen besonders bevorzugten Ausführungsvariante der Erfindung ist vorgesehen, dass die elektrische Antriebseinheit als Innenläufermotor ausgebildet ist und der Rotor eine zentrische Durchgangsöffnung für die Anbindung der Kurbelwelle aufweist, wobei eine Außenfläche des Befestigungsabschnitts der hülsenförmigen Schmiermittelaufnahme eine Wandfläche der Durchgangsöffnung kontaktiert. Bei einem Innenläufermotor, der in der Regel sehr kostengünstig herstellbar ist, ist der Rotor radial bezogen auf die Längsachse innen angeordnet während der Stator radial außen angeordnet ist. Der Rotor, der beispielsweise als Rotorblechpaket ausgeführt ist, weist eine zentrische Durchgangsöffnung auf, die abschnittsweise zur Befestigung an der Kurbelwelle dient. Eine an die Durchgangsöffnung anschließende Freistellung kann vorgesehen sein, um einen in den Rotor ragenden Abschnitt einer Lagerbuchse zur Lagerung der Kurbelwelle aufzunehmen, wobei die Lagerbuchse von einem Trägergehäuse der Kolben-Zylinder-Einheit ausgebildet sein kann. Da der Rotor in der Regel an dem der Kolben-Zylinder-Einheit gegenüberliegenden Ende mit der Kurbelwelle verbunden ist, übt der Befestigungsabschnitt der Schmiermittelaufnahme gleichzeitig eine ausgleichende Wirkung auf den bei kurzen Klemmlängen der Lamellen des Rotorpaktes auftretenden Schraubenlinieneffekt aus. Dadurch wird ein durch den Schraubenlinieneffekt bedingter Luftspaltfehler zwischen Rotor und Stator reduziert, was in einem höheren Wirkungsgrad des Kältemittelverdichters resultiert. Zusätzlich dazu ist ein Überstand der Kurbelwelle über die letzte Lamelle des Rotorpakets nicht notwendig bzw. kann drastisch reduziert werden, da der Befestigungsabschnitt der Schmiermittelaufnahme in der Durchgangsöffnung zwischen Rotor und Kurbelwelle angeordnet ist und nicht am Überstand der Kurbelwelle befestigt werden muss.

In beiden besonders bevorzugten Ausführungsvarianten, also bei der Außenläufermotor Ausführung und der Innenläufermotor Ausführung, ist es vorteilhaft, wenn sich die Schmiermittelaufnahme, insbesondere der Befestigungsabschnitt, durch die gesamte Durchgangsöffnung erstreckt.

Um die Förderung des Schmiermittels innerhalb der Schmiermittelaufnahme, insbesondere im Aufnahmebereich, zu verbessern, ist in einer weiteren bevorzugten Ausführungsvariante der Erfindung vorgesehen, dass im Inneren der hülsenförmigen Schmiermittelaufnahme ein Schmiermittelmitnehmer angeordnet ist, wobei Schmiermittelmitnehmer und Schmiermittelaufnahme vorzugsweise einstückig ausgebildet sind. Der Schmiermittelmitnehmer ist dabei zentrisch angeordnet und kann beispielsweise eine oder mehrere schraubenförmige oder planare Flächen zur Drängung des Schmiermittels nach außen in Richtung der Innenwand der Schmiermittelaufnahme bzw. in axialer Richtung nach oben in Richtung der Bohrung der Kurbelwelle aufweisen. In der Regel sind Schmiermittelaufnahme und Schmiermittelmitnehmer zweistückig ausgeführt, wobei der Schmiermittelmitnehmer im Inneren der Schmiermittelaufnahme befestigt ist. Vorteilhafterweise kann auch vorgesehen sein, dass Schmiermittelmitnehmer und Schmiermittelaufnahme einstückig ausgebildet sind, beispielsweise wenn der Befestigungsabschnitt Freistellungen aufweist, kann das Material der Freistellungen nach innen gebogen sein und als Schmiermittelmitnehmer fungieren. Denkbar ist auch eine mittels einem 3D-Druck-Verfahren (Rapid Prototyping) hergestellte einstückige Ausführungsvariante.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine Schnittdarstellung einer ersten Ausführungsvariante eines erfindungsgemäßen Kältemittelverdichters;
- Fig. 2: eine vergrößerte Detaildarstellung eines Bodenbereichs des Kältemittelverdichters nach Fig. 1;
- Fig. 3: eine weitere vergrößerte Detaildarstellung nach Fig. 1;
- Fig. 4: eine Schnittdarstellung einer zweiten Ausführungsvariante eines erfindungsgemäßen Kältemittelverdichters;
- Fig. 5: eine Schnittdarstellung einer dritten Ausführungsvariante eines erfindungsgemäßen Kältemittelverdichters;
- Fig. 6: eine vergrößerte Detaildarstellung des Bodenbereichs des Kältemittelverdichters nach Fig. 5.

### WEGE ZUR AUSFÜHRUNG DER ERFINDUNG

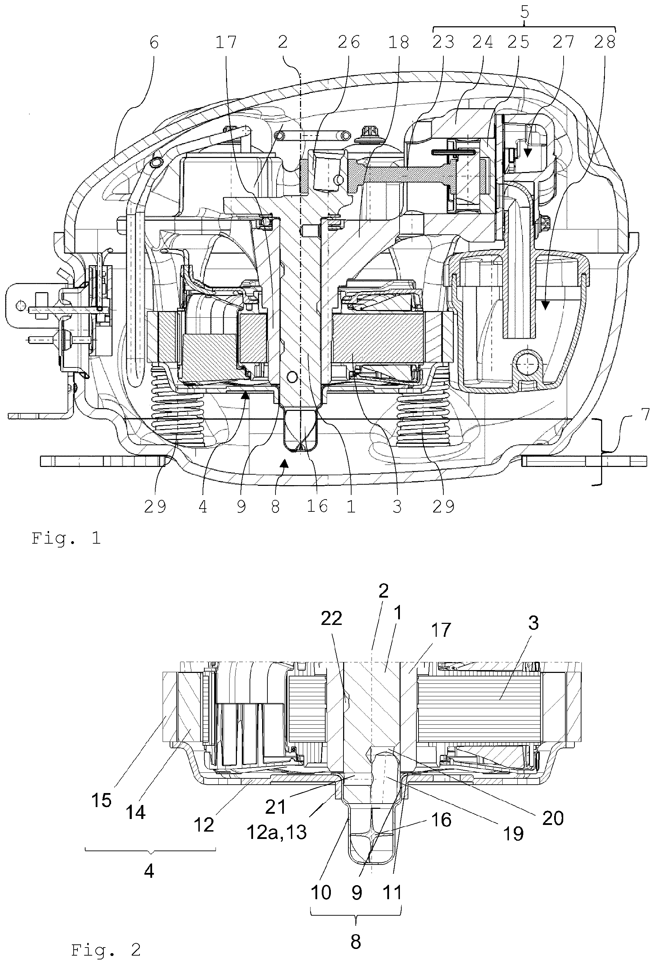

Die Figuren 1 bis 3 zeigen eine erste Ausführungsvariante eines erfindungsgemäßen Kältemittelverdichters mit einer als Außenläufer ausgebildeten Antriebseinheit, welche im Inneren eines hermetisch kapselbaren Verdichtergehäuses 6 angeordnet ist. Die Antriebseinheit umfasst einen Stator 3 und einen Rotor 4. Zentrisch zu Stator 3 und Rotor 4 ist eine eine Längsachse 2 aufweisende Kurbelwelle 1 angeordnet, welche Kurbelwelle 1 drehfest, beispielsweise form-, reib oder stoffschlüssig, mit dem Rotor 4 verbunden ist, um eine Kältemittel taktweise verdichtende Kolben-Zylinder-Einheit 5 des Kältemittelverdichters anzutreiben. Die Kurbelwelle 1 ist in einer Lagerbuchse 17 eines die Kolben-Zylinder-Einheit 5 tragenden Trägergehäuses 18 gelagert. An der Außenseite der Lagerbuchse 17 ist der Stator 3 befestigt, welcher in radialer Richtung bezogen auf die Längsachse 2, in der Folge auch als Radialrichtung bezeichnet, innen angeordnet ist.

Die Kurbelwelle 1 ist Teil eines Kurbeltriebs, welcher Kurbeltrieb einen exzentrisch zur Längsachse 2 versetzten und direkt mit der Kurbelwelle 1 verbundenen Kurbelzapfen 26 aufweist. Die Kolben-Zylinder-Einheit 5 umfasst einen Kolben 25 welcher in einem Zylindergehäuse 24 linear bewegbar geführt ist, ein den Kurbelzapfen 26 mit dem Kolben 25 verbindendes Pleuel 23, eine Ventile umfassende Zylinderkopfanordnung 27 und einen mit der Zylinderkopfanordnung 27 verbundenen Saugschalldämpfer 28.

Im vorliegenden Ausführungsbeispiel sind das Trägergehäuse 18 und das Zylindergehäuse 24 einstückig, genauer als Gussteil, ausgebildet. Das Trägergehäuse 18 weist mehrere Fortsätze auf, über welche das Trägergehäuse 18 an in einem Bodenbereich 7 des Verdichtergehäuses 6 angeordneten Federelementen 29 im Verdichtergehäuse 6 gelagert ist. In alternativen Ausführungsvarianten können Trägergehäuse 18 und Zylindergehäuse 24 zweistückig ausgebildet sein und über Verbindungsmittel miteinander verbunden sein.

Der Rotor 4 umfasst, wie in Figur 2 dargestellt, eine Mehrzahl an Permanentmagneten 14 welche in Radialrichtung außerhalb des Stators 3 angeordnet sind und über einen Kurzschlussring 15 miteinander in Umfangsrichtung verbunden sind. Um die Permanentmagnete 14 mit der Kurbelwelle 1 mittels Kraft- bzw. Reibschluss drehfest zu verbinden, weist der Rotor 4 ein sich radial von der Kurbelwelle 1 nach außen erstreckendes Trägerelement 12 auf, welches den Stator 3 untergreift. Das Trägerelement 12 ist im Wesentlichen tellerförmig ausgebildet und weist einen erhöhten, in Richtung der Kolben-Zylinder-Einheit 5 gewölbten Randabschnitt auf, an welchem die Permanentmagnete 14 und der Kurzschlussring 15 befestigt sind. Zur Verbindung mit der Kurbelwelle 1 weist das Trägerelement 12 eine zentrisch angeordnete Durchgangsöffnung 13 auf, um den Rotor 4 koaxial zur Längsachse 2 zu positionieren. Das Trägerelement 12 weist in den vorliegenden Ausführungsbeispielen einen hülsenförmigen Fortsatz 12a mit kreiszylindrischem lichtem Querschnitt auf, welcher zentrisch angeordnet ist und sich auf die der Kolben-Zylinder-Einheit 5 abgewandte Seite des Trägerelements 12 erstreckt. Die Durchgangsöffnung 13 ist dabei durch den Fortsatz 12a ausgebildet. Trägerelement 12 und Fortsatz 12a sind im vorliegenden Ausführungsbeispiel einstückig ausgebildet, wobei der Fortsatz 12a und der Randabschnitt mittels eines Umformverfahrens, beispielsweise mittels eines Tiefziehverfahrens, aus dem Trägerelement 12 ausgeformt ist.

Um die Lagerstellen der Kurbelwelle 1 in der Lagerbuchse 17 und die Kolben-Zylinder-Einheit 5 in einem Betriebszustand des Kältemittelverdichters zu schmieren und mit Schmiermittel aus einem im Betriebszustand im Bodenbereich 7 des Verdichtergehäuses 6 ausgebildeten Schmiermittelsumpf zu versorgen, weist die Kurbelwelle 1 an dem der Kolben-Zylinder-Einheit 5 gegenüberliegenden Ende, sprich am unteren Ende, eine geneigt zur Längsachse 2 verlaufenden, sprich eine im Wesentlichen axial verlaufende, Exzenterbohrung 19 auf, welche in Radialrichtung exzentrisch zur Längsachse 2 angeordnet ist. Schmiermittel welches in die Exzenterbohrung 19 gelangt wird aufgrund der Zentrifugalkraft bei der Rotation der Kurbelwelle 1 an die Wand der Exzenterbohrung 19 gedrückt und aufgrund des erhöhten Drucks in Richtung der Kolben-Zylinder-Einheit 5 gefördert. Im vorliegenden Ausführungsbeispiel ist die Exzenterbohrung 19 als Sacklochbohrung ausgeführt und an dem der Kolben-Zylinder-Einheit 5 zugewandten Ende über eine erste Radialbohrung 20 mit einer an der Umfangsfläche der Kurbelwelle 1 ausgebildeten Wendelnut 22 zur Förderung des Schmiermittels verbunden. Eine zweite Radialbohrung 21, welche in Richtung der Längsachse 2 gesehen näher am unteren Ende der Kurbelwelle 1 angeordnet ist, dient der Entlüftung des Schmiermittelsystems. Durch die Entlüftung wird die Fördergeschwindigkeit erhöht und gleichzeitig einer sich negativ auswirkenden Pulsation vorgebeugt.

In alternativen Ausführungsvarianten kann die Exzenterbohrung 19 auch parallel zur Längsachse 2 verlaufend angeordnet sein oder statt der Exzenterbohrung kann eine koaxial zur Längsachse 2 verlaufende axiale Bohrung vorgesehen sein.

Um nun Schmiermittel aus dem Schmiermittelsumpf in die Exzenterbohrung 19 zu bringen ohne dass ein freies Ende der Kurbelwelle 1 in den Schmiermittelsumpf eintauchen muss, ist eine hülsenförmige Schmiermittelaufnahme 8 vorgesehen, welche an dem der Kolben-Zylinder-Einheit 5 gegenüberliegenden Ende der Kurbelwelle 1 drehfest mit der Kurbelwelle 1 verbunden ist und so mit der Kurbelwelle 1 mitrotiert. Über eine Schmiermitteleintrittsöffnung tritt Schmiermittel in einen Aufnahmeabschnitt 10 der Schmiermittelaufnahme 8 ein. Da die Schmiermittelaufnahme 8 eine rotationssymmetrische Form bezogen auf die Längsachse 2 aufweist und koaxial zur Längsachse 2 angeordnet ist, bildet sich durch die Rotation der Schmiermittelaufnahme 8 eine Schmiermittelparabel bzw. eine paraboloidförmige Schmiermittelsäule in der Schmiermittelaufnahme 8 aus, welche am unteren Ende der Kurbelwelle 1 in die Exzenterbohrung 19 übertritt und dort weiter in Richtung der ersten Radialbohrung 20 gefördert wird.

Mit zunehmendem Abstand zwischen einem Spiegel des Schmiermittelsumpfs und der ersten Radialbohrung 20, auch als Förderhöhe bezeichnet, sinkt die Förderleistung des Schmiermittel-Fördersystems. Daher ist es ein Aspekt der Erfindung, dass ein Befestigungsabschnitt 9 der hülsenförmigen Schmiermittelaufnahme 8 zwischen dem Rotor 4 und der Kurbelwelle 1 angeordnet ist. Durch die Überlappung von Befestigungsabschnitt 9, Rotor 4 und Kurbelwelle 1 kann eine besonders platzsparende Anbindung der Schmiermittelaufnahme 8 an die Kurbelwelle 1 erreicht werden, wodurch die Förderhöhe gesenkt werden kann und damit die Förderleistung, also der Schmiermitteldurchsatz pro Minute, gesteigert werden kann. Die Steigerung der Förderleistung lässt sich dadurch erklären, dass aufgrund der geringeren Förderhöhe die Wandstärke der Schmiermittelparabel im Bereich der zweiten Radialbohrung 20 größer ist und damit mehr Schmiermittel in die Wendelnut 22 gelangt. Durch die höhere Förderleistung lässt sich auch bei geringeren Drehzahlen eine ausreichende Schmierung der Kolben-Zylinder-Einheit 5 gewährleisten, sodass der Kältemitteverdichter möglichst energieoptimiert betrieben werden kann.

Desto größer die Überlappung zwischen Befestigungsabschnitt 9, Rotor 4 und Kurbelwelle 1 ist, desto geringer ist die Förderhöhe des Schmiermittels. Zusätzlich dazu ist es nicht notwendig, dass die Kurbelwelle 1 über den Rotor 4 hinaus ragt, um den Befestigungsabschnitt 9 der Schmiermittelaufnahme 8 aufnehmen zu können, da die Befestigung des Rotors 4 an der Kurbelwelle 1 und die Befestigung der Schmiermittelaufnahme 8 mittels des Befestigungsabschnitts 9 im selben Bereich der Kurbelwelle 1, nämlich am unteren Ende, erfolgt. Im vorliegenden Ausführungsbeispiel kontaktiert eine Innenfläche des Befestigungsabschnitts 9 eine äußere Umfangsfläche der Kurbelwelle 1 und kontaktiert eine Außenfläche des Befestigungsabschnitts 9 eine Innenfläche des Rotors 4, genauer gesagt eine Wandfläche der Durchgangsöffnung 13. Wie in der Abbildung gut zu erkennen ist, weist der Befestigungsabschnitt 9 einen kreiszylindrischen lichten Querschnitt auf, in welchem das untere Ende der Kurbelwelle 1 aufgenommen ist, während das Trägerelement 12 des Rotors 4 an der Außenfläche des Befestigungsabschnitts 9 sitzt. Die Befestigung des Rotors 4 an der Kurbelwelle 1 erfolgt also durch, zumindest abschnittsweise, Zwischenlage des Befestigungsabschnitts 9 der hülsenförmigen Schmiermittelaufnahme 8. Während einander Durchgangsöffnung 13, Befestigungsabschnitt 9 und das untere Ende der Kurbelwelle 1 im vorliegenden Ausführungsbeispiel vollständig überlappen, kann in alternativen Ausführungsvarianten auch eine teilweise Überlappung, bspw. 50%, 75%, 80%, 85%, 90% oder 95% bezogen auf die axiale Erstreckung des Befestigungsabschnitts 9, von Durchgangsöffnung 13 und Befestigungsabschnitt 9 vorgesehen sein.

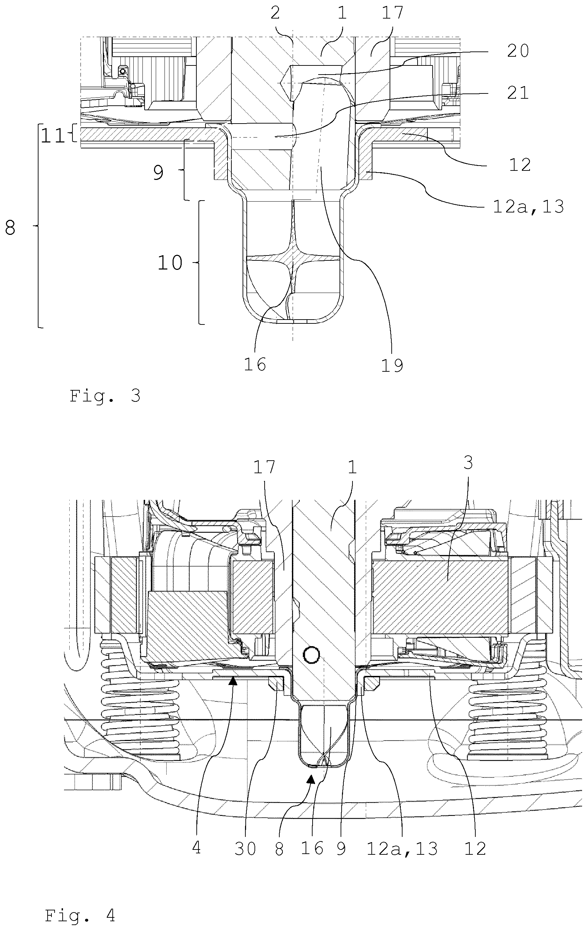

Wie in Figur 3 im Detail zu erkennen ist, schließt auf der dem Aufnahmeabschnitt 10 gegenüberliegenden Seite des Befestigungsabschnitts 9 ein Kragenabschnitt 11 an den Befestigungsabschnitt 9 an, welcher Kragenabschnitt 11 winkelig vom Befestigungsabschnitt 9 absteht und sich in Radialrichtung erstreckt. Im vorliegenden Ausführungsbeispiel steht der Kragenabschnitt 11 rechtwinklig vom Befestigungsabschnitt 9 ab und liegt an einer der Kolben-Zylinder-Einheit 5 zugewandten Oberseite des Trägerelements 12 auf. Der Kragenabschnitt 11 kann beispielsweise bei der Montage als Anschlag dienen. Gleichzeitig kann bei der Montage der Kurbelwelle 1 das axiale Spiel der Kurbelwelle 1 durch die Anbringung der Schmiermittelaufnahme 8 eingestellt werden, da der Umriss der Lagerbuchse 17 und der Kragenabschnitt 11 einander in Richtung der Längsachse 2 gesehen überlappen, sodass die Montage des Rotors 4 erst in einem nachfolgenden Montageschritt erfolgen kann, ohne dass die Gefahr eines axialen Verrutschens der Kurbelwelle 1 in der Lagerbuchse 17 besteht. Auch die Neigung der Achse der Exzenterbohrung 19 relativ zur Längsachse 2 von etwa 3° bis 7° und die Anordnung der ersten 20 und zweiten Radialbohrung 21, wobei die Öffnungen der beiden Radialbohrungen 20,21 einander gegenüberliegend angeordnet sind, sind in Figur 3 deutlich zu erkennen.

Figur 4 zeigt eine zweite Ausführungsvariante der Erfindung, welche sich nur geringfügig von der ersten Ausführungsvariante unterscheidet, weshalb in der Folge nur auf die Unterschiede eingegangen wird. Um die Anbindung des Trägerelements 12 an die Kurbelwelle 1 zu verbessern und die Flächenpressung zwischen Trägerelement 12 und Befestigungsabschnitt 9 bzw. zwischen Befestigungsabschnitt 9 und Kurbelwelle 1 zu erhöhen, ist ein ringförmiges Stützelement 30 auf den Fortsatz 12a aufgepresst oder aufgeschrumpft. In anderen Worten kontaktiert das Stützelement 30 eine äußere Umfangsfläche des Fortsatzes 12a und übt eine radial nach innen in Richtung der Längsachse 2 gerichtete Kraft auf den Befestigungsabschnitt 9 aus. Durch diese Kraft erhöht sich die Flächenpressung und die Qualität der kraft- bzw. reibschlüssigen Verbindung zwischen der Wandfläche der Durchgangsöffnung 13 und der Außenfläche des Befestigungsabschnitts 9 bzw. zwischen der Innenfläche des Befestigungsabschnitts 9 und der Umfangsfläche der Kurbelwelle 1. Das Stützelement 30 kontaktiert dabei eine Unterseite des Trägerelements 12 und überlappt etwa 80% des Fortsatzes 12a.

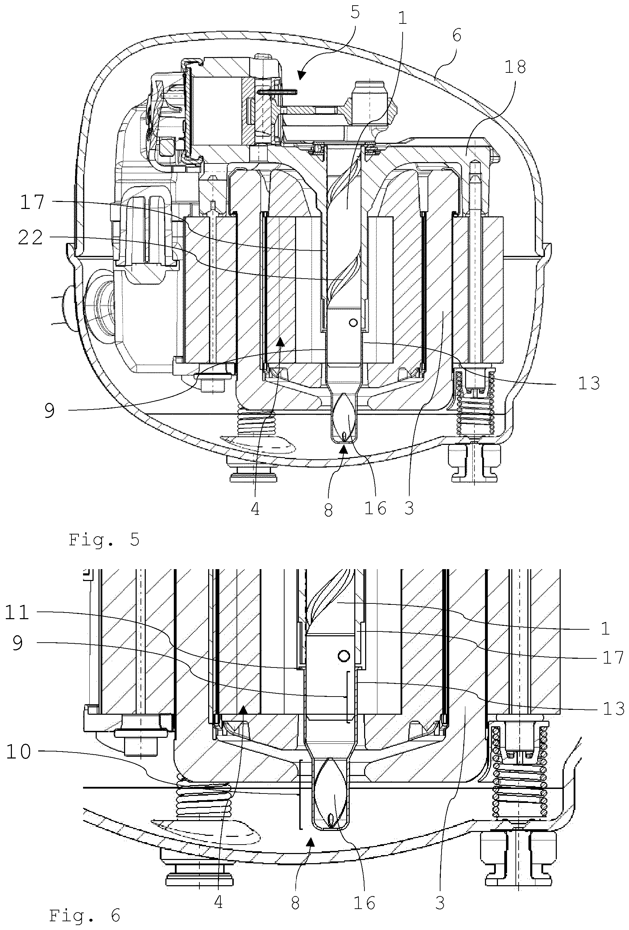

Die Figuren 5 und 6 zeigen eine dritte Ausführungsvariante eines erfindungsgemäßen Kältemittelverdichters bei der die Antriebseinheit als Innenläufermotor ausgebildet ist. Der Rotor 4 ist somit bezogen auf die Längsachse 2 innerhalb des Stators 3 angeordnet. Dabei ist ein, beispielsweise lamellenartige Rotorbleche umfassendes, Rotorpaket unmittelbar an der Kurbelwelle 1 befestigt. In diesem Fall weist der Rotor 4 bzw. das Rotorpaket des Rotors 4 eine zentrische Durchgangsöffnung 13 auf, welche einerseits zur Befestigung an der Kurbelwelle 1 dient und andererseits eine Freistellung für die Aufnahme der Lagerbuchse 17 aufweist, da die Lagerbuchse 17 in axialer Richtung in den Rotor 4 hineinragt. Die Kolben-Zylinder-Einheit 5 entspricht in ihrem Aufbau im Wesentlichen dem in Figur 1 beschriebenen Aufbau. Gut zu erkennen ist, aufgrund der nicht geschnittenen Kurbelwelle 1, der Verlauf der Wendelnut 22, welche in den vorherigen Ausführungsbeispielen analog ausgebildet ist.

Auch in dieser Ausführungsvariante kann die Förderleistung des Schmiermittel-Fördersystems verbessert werden, indem der Befestigungsabschnitt 9 der hülsenförmigen Schmiermittelaufnahme 8 zwischen Rotor 4 und Kurbelwelle 1 angeordnet ist. Dabei kontaktiert die Innenfläche des Befestigungsabschnitts 9 die äußere Umfangsfläche des unteren Endes der Kurbelwelle 1 während die Außenfläche des Befestigungsabschnitts 9 eine Innenfläche des Rotors 4, genauer eine Wandfläche der Durchgangsöffnung 13, kontaktiert. Im vorliegenden Ausführungsbeispiel ist die Abmessung des Befestigungsabschnitts 9 in Richtung der Längsachse 2 gesehen derart gewählt, dass der Befestigungsabschnitt 9 die gesamte Durchgangsöffnung 13 durchquert und der Kragenabschnitt 11 auf einer der Kolben-Zylinder-Einheit 5 zugewandten oberen Fläche des Rotors 4 anliegt. Somit kann bei der Montage die Schmiermittelaufnahme 8 von oben in den Rotor 4 eingeschoben werden, wobei der Kragenabschnitt 11 als Anschlag dient.

Bei beiden Ausführungsvarianten kann vorgesehen sein, dass der Befestigungsabschnitt 9 eine oder mehrere, beispielsweise zwei, drei oder vier, schlitzartige Freistellungen aufweist welche mit Stegen des Rotors, bzw. in der Durchgangsöffnung 13 ausgebildeten Stegen korrespondieren. Wenn die Stege in die Freistellungen eingreifen ist in diesen Abschnitten ein unmittelbarer Kontakt zwischen Rotor 4 und Kurbelwelle 1 - ohne Zwischenlage des Befestigungsabschnitts 8 der Schmiermittelaufnahme 9 - möglich. Dadurch kann die drehfeste Befestigung des Rotors 4 an der Kurbelwelle 1 verbessert werden. In der Regel werden dabei der Befestigungsabschnitt 9 der Schmiermittelaufnahme 8 und die Durchgangsöffnung 13 des Rotors 4 auf die Kurbelwelle 1 aufgepresst oder aufgeschrumpft.

In der Schmiermittelaufnahme 9 kann des Weiteren ein Schmiermittelmitnehmer 16 angeordnet sein, welcher die Ausbildung der Schmiermittelparabel unterstützt und die Förderleistung der Ölfördereinrichtung erhöht. Daher ist in jedem der zuvor beschriebenen Ausführungsbeispiele ein Schmiermittelmitnehmer 16 in der Schmiermittelaufnahme 8 angeordnet, welcher zumindest eine oder mehrere schraubenförmige Flächen nach außen in Richtung der Innenwand der Schmiermittelaufnahme 8 bzw. zur Drängung des Schmiermittels in axialer Richtung nach oben in Richtung der Exzenterbohrung 19 der Kurbelwelle 1 aufweist. Es ist auch denkbar, dass die eine oder mehreren Flächen des Schmiermittelmitnehmers 16 planar ausgebildet sind.

### BEZUGSZEICHENLISTE

- 1: Kurbelwelle
- 2: Längsachse der Kurbelwelle 1
- 3: Stator
- 4: Rotor
- 5: Kolben-Zylinder-Einheit
- 6: Verdichtergehäuse
- 7: Bodenbereich des Verdichtergehäuses 6
- 8: hülsenförmige Schmiermittelaufnahme
- 9: Befestigungsabschnitt der Schmiermittelaufnahme 8
- 10: Aufnahmeabschnitt der Schmiermittelaufnahme 8
- 11: Kragenabschnitt
- 12: Trägerelement des Rotors 4
12a hülsenförmiger Fortsatz des Trägerelements 12
- 13: Durchgangsöffnung
- 14: Permanentmagnet
- 15: Kurzschlussring
- 16: Schmiermittelmitnehmer
- 17: Lagerbuchse
- 18: Trägergehäuse
- 19: Exzenterbohrung
- 20: erste Radialbohrung
- 21: zweite Radialbohrung
- 22: Wendelnut
- 23: Pleuel
- 24: Zylindergehäuse
- 25: Kolben
- 26: Kurbelzapfen
- 27: Zylinderkopfanordnung
- 28: Saugschalldämpfer
- 29: Federelement
- 30: ringförmiges Stützelement

## Patentansprüche

1. Kältemittelverdichter mit
- einem, vorzugsweise hermetisch abdichtbaren, Verdichtergehäuse (6);
- einer elektrischen Antriebseinheit umfassend einen Rotor (4) und einen Stator (3);
- einer mit dem Rotor (4) drehfest verbundenen, eine Längsachse (2) aufweisenden Kurbelwelle (1);
- einer von der Kurbelwelle (1) antreibbaren Kolben-Zylinder-Einheit (5);
wobei an einem der Kolben-Zylinder-Einheit (5) gegenüberliegenden Ende der Kurbelwelle (1) eine hülsenförmige Schmiermittelaufnahme (8) zur zentrifugischen Förderung von Schmiermittel aus einem in einem Bodenbereich (7) des Verdichtergehäuses (6) ausgebildeten Schmiermittelsumpf in Richtung der Kolben-Zylinder-Einheit (5) angeordnet ist,
wobei die hülsenförmige Schmiermittelaufnahme (8) einen Befestigungsabschnitt (9) aufweist, mittels welchem Befestigungsabschnitt (9) die Schmiermittelaufnahme (8) an der Kurbelwelle (1), vorzugsweise drehfest, befestigt ist,
wobei der Befestigungsabschnitt (9) der hülsenförmigen Schmiermittelaufnahme (8) in radialer Richtung bezogen auf die Längsachse (2) der Kurbelwelle (1) zumindest abschnittsweise zwischen der Kurbelwelle (1) und dem Rotor (4) angeordnet ist,
wobei die hülsenförmige Schmiermittelaufnahme (8) eine rotationssymmetrische Form bezogen auf die Längsachse (2) aufweist und sich der Befestigungsabschnitt (9) der hülsenförmigen Schmiermittelaufnahme (8) parallel zur Längsachse (2) erstreckt, wobei der Durchmesser des Befestigungsabschnitts (9) größer oder zumindest gleich groß ist als der Durchmesser eines
Aufnahmeabschnitts (10) der Schmiermittelaufnahme (8),
**dadurch gekennzeichnet, dass**
die hülsenförmige Schmiermittelaufnahme (8) einen an den Befestigungsabschnitt (9) anschließenden, sich radial zur Längsachse (2) nach außen erstreckenden Kragenabschnitt (11) aufweist.

2. Kältemittelverdichter nach Anspruch 1, **dadurch gekennzeichnet, dass** eine Innenfläche des Befestigungsabschnitts (9) der hülsenförmigen Schmiermittelaufnahme (8) eine Umfangsfläche der Kurbelwelle (1) kontaktiert
und dass eine Außenfläche des Befestigungsabschnitts (9) der hülsenförmigen Schmiermittelaufnahme (8) eine Innenfläche des Rotors (4) kontaktiert.

3. Kältemittelverdichter nach einem der Ansprüche 1 oder 2, **dadurch gekennzeichnet, dass** der Befestigungsabschnitt (9) der hülsenförmigen Schmiermittelaufnahme (8) zwischen Rotor (4) und Kurbelwelle (1) drehfest fixiert ist.

4. Kältemittelverdichter nach einem der Ansprüche 1 bis 3, **dadurch gekennzeichnet, dass** eine Überlappung von Rotor (4) und Befestigungsabschnitts (9) in axialer Richtung bezogen auf die Längsachse (2) mehr als 50%, vorzugsweise mehr als 75%, insbesondere zwischen 75% und 100%, der axialen Erstreckung des Befestigungsabschnitts (9) bezogen auf die Längsachse (2) beträgt.

5. Kältemittelverdichter nach einem der Ansprüche 1 bis 4, **dadurch gekennzeichnet, dass** der Kragenabschnitt (11) am Rotor (4) anliegt.

6. Kältemittelverdichter nach einem der Ansprüche 1 bis 5, **dadurch gekennzeichnet, dass** der Befestigungsabschnitt (9) der hülsenförmigen Schmiermittelaufnahme (8) zumindest eine, sich vorzugsweise über die gesamte Erstreckung des Befestigungsabschnitts (9) parallel zur Längsachse (2) erstreckende, schlitzartige Freistellung aufweist, wobei der Rotor (4) zumindest einen zur Freistellung korrespondierenden Steg aufweist.

7. Kältemittelverdichter nach einem der Ansprüche 1 bis 6, **dadurch gekennzeichnet, dass** die elektrische Antriebseinheit als Außenläufermotor ausgebildet ist und der Rotor (4) ein sich zumindest abschnittsweise radial zur Längsachse (2) nach außen erstreckendes Trägerelement (12) aufweist,
wobei das Trägerelement (12) drehfest an der Kurbelwelle (1) angebunden ist.

8. Kältemittelverdichter nach Anspruch 7, **dadurch gekennzeichnet, dass** das Trägerelement (12) eine zentrische Durchgangsöffnung (13) für die Anbindung der Kurbelwelle (1) aufweist,
wobei eine Außenfläche des Befestigungsabschnitts (9) der hülsenförmigen Schmiermittelaufnahme (8) eine Wandfläche der Durchgangsöffnung (13) kontaktiert.

9. Kältemittelverdichter nach Anspruch 8, **dadurch gekennzeichnet, dass** die Durchgangsöffnung (13) durch einen hülsenförmigen Fortsatz (12a) des Trägerelements (12) ausgebildet ist
und dass ein ringförmiges Stützelement (30) auf den hülsenförmigen Fortsatz (12a) aufgepresst oder aufgeschrumpft ist.

10. Kältemittelverdichter nach einem der Ansprüche 1 bis 6, **dadurch gekennzeichnet, dass** die elektrische Antriebseinheit als Innenläufermotor ausgebildet ist und der Rotor (4) eine zentrische Durchgangsöffnung (13) für die Anbindung der Kurbelwelle (1) aufweist,
wobei eine Außenfläche des Befestigungsabschnitts (9) der hülsenförmigen Schmiermittelaufnahme (8) eine Wandfläche der Durchgangsöffnung (13) kontaktiert.

11. Kältemittelverdichter nach einem der Ansprüche 1 bis 10, **dadurch gekennzeichnet, dass** im Inneren der hülsenförmigen Schmiermittelaufnahme (8) ein Schmiermittelmitnehmer (16) angeordnet ist, wobei Schmiermittelmitnehmer (16) und Schmiermittelaufnahme (8) vorzugsweise einstückig ausgebildet sind.

## Claims

1. Refrigerant compressor, comprising
- a, preferably hermetically sealable, compressor housing (6);
- an electric drive unit having a rotor (4) and a stator (3);
- a crankshaft (1) which is connected in a rotationally fixed manner to the rotor (4) and which has a longitudinal axis (2);
- a piston-cylinder unit (5) drivable by the crankshaft (1);
wherein a sleeve-shaped lubricant receptacle (8) for centrifugally conveying lubricant from a lubricant sump formed in a bottom region (7) of the compressor housing (6) in the direction of the piston cylinder unit (5) is arranged at an end of the crankshaft (1) opposite the piston cylinder unit (5), wherein the sleeve-shaped lubricant receptacle (8) has a fastening section (9), by means of which fastening section (9) the lubricant receptacle (8) is fastened to the crankshaft (1), preferably in a rotationally fixed manner, wherein the fastening section (9) of the sleeve-shaped lubricant receptacle (8) is arranged at least in sections between the crankshaft (1) and the rotor (4) in the radial direction with respect to the longitudinal axis (2) of the crankshaft (1),
wherein the sleeve-shaped lubricant receptacle (8) has a rotationally symmetrical shape in relation to the longitudinal axis (2), and the fastening section (9) of the sleeve-shaped lubricant receptacle (8) extends parallel to the longitudinal axis (2), wherein the diameter of the fastening section (9) is greater than or at least equal to the diameter of a receiving section (10) of the lubricant receptacle (8)
**characterized in that**
the sleeve-shaped lubricant receptacle (8) has a collar section (11) adjoining the fastening section (9) and extending radially outwards relative to the longitudinal axis (2).

2. Refrigerant compressor according to claim 1, **characterized in that** an inner surface of the fastening section (9) of the sleeve-shaped lubricant receptacle (8) contacts a circumferential surface of the crankshaft (1),
and **in that** an outer surface of the fastening section (9) of the sleeve-shaped lubricant receptacle (8) contacts an inner surface of the rotor (4).

3. Refrigerant compressor according to one of claims 1 or 2, **characterized in that** the fastening section (9) of the sleeve-shaped lubricant receptacle (8) is fixed in a rotationally fixed manner between the rotor (4) and the crankshaft (1).

4. Refrigerant compressor according to one of claims 1 to 3, **characterized in that** an overlap of rotor (4) and fastening section (9) in the axial direction relative to the longitudinal axis (2) is more than 50%, preferably more than 75%, in particular between 75% and 100%, of the axial extension of the fastening section (9) relative to the longitudinal axis (2).

5. Refrigerant compressor according to one of claims 1 to 4, **characterized in that** the collar section (11) abuts the rotor (4).

6. Refrigerant compressor according to one of claims 1 to 5, **characterized in that** the fastening section (9) of the sleeve-shaped lubricant receptacle (8) comprises at least one slot-like clearance extending preferably over the entire extension of the fastening section (9) parallel to the longitudinal axis (2), wherein the rotor (4) comprises at least one web corresponding to the clearance.

7. Refrigerant compressor according to one of claims 1 to 6, **characterized in that** the electric drive unit is designed as an external rotor motor and the rotor (4) comprises a carrier element (12) extending outwards at least in sections radially with respect to the longitudinal axis (2), wherein the carrier element (12) is connected in a rotationally fixed manner to the crankshaft (1).

8. Refrigerant compressor according to claim 7, **characterized in that** the carrier element (12) has a centric through-hole (13) for connecting said crankshaft (1),
wherein an outer surface of said fastening section (9) of the sleeve-shaped lubricant receptacle (8) contacts a wall surface of the through-hole (13).

9. Refrigerant compressor according to claim 8, **characterized in that** the through-hole (13) is formed by a sleeve-shaped extension (12a) of the carrier element (12), and **in that** an annular support element (30) is pressed or shrunk onto the sleeve-shaped extension (12a).

10. Refrigerant compressor according to one of claims 1 to 6, **characterized in that** the electric drive unit is designed as an internal rotor motor and the rotor (4) has a centric through-hole (13) for the connection of the crankshaft (1), wherein an outer surface of the fastening section (9) of the sleeve-shaped lubricant receptacle (8) contacts a wall surface of the through-hole (13).

11. Refrigerant compressor according to one of claims 1 to 10, **characterized in that** a lubricant driver (16) is arranged in the interior of the sleeve-shaped lubricant receptacle (8), wherein the lubricant driver (16) and the lubricant receptacle (8) are preferably formed in one piece.

## Revendications

1. Compresseur de réfrigérant avec
- un carter de compresseur (6) pouvant de préférence être fermé hermétiquement ;
- une unité d'entraînement électrique comprenant un rotor (4) et un stator (3) ;
- un vilebrequin (1) présentant un axe longitudinal (2) et relié de manière solidaire en rotation avec le rotor (4) ;
- une unité de vérin (5) pouvant être entraînée par le vilebrequin (1) ;
dans lequel un réceptacle à lubrifiant en forme de douille (8) est disposé à une extrémité du vilebrequin (1) faisant face à l'unité de vérin (5) pour le transport centrifuge de lubrifiant d'un bac à lubrifiant formé dans une partie de fond (7) du carter de compresseur (6) vers l'unité de vérin (5), le réceptacle à lubrifiant en forme de douille (8) présentant une partie de fixation (9) et le réceptacle à lubrifiant en forme de douille (8) étant fixé sur le vilebrequin (1), de préférence de manière solidaire en rotation, au moyen de cette partie de fixation (9),
dans lequel la partie de fixation (9) du réceptacle à lubrifiant en forme de douille (8) est disposée au moins en partie entre le vilebrequin (1) et le rotor (4) dans le sens radial par rapport à l'axe longitudinal (2) du vilebrequin (1),
dans lequel le réceptacle à lubrifiant en forme de douille (8) présente une forme symétrique en rotation par rapport à l'axe longitudinal (2) et la partie de fixation (9) du réceptacle à lubrifiant en forme de douille (8) s'étend parallèlement à l'axe longitudinal (2), le diamètre de la partie de fixation (9) étant plus grand ou au moins égal à celui d'une partie formant réceptacle (10) du réceptacle à lubrifiant en forme de douille (8), **caractérisé en ce que** le réceptacle à lubrifiant en forme de douille (8) présente une partie de collet (11) qui se raccorde à la partie de fixation (9) et s'étend vers l'extérieur dans le sens radial par rapport à l'axe longitudinal (2).

2. Compresseur de réfrigérant selon la revendication 1, **caractérisé en ce qu'**une surface intérieure de la partie de fixation (9) du réceptacle à lubrifiant en forme de douille (8) vient en contact avec une surface de circonférence du vilebrequin (1) et
**en ce qu'**une surface extérieure de la partie de fixation (9) du réceptacle à lubrifiant en forme de douille (8) vient en contact avec une surface intérieure du rotor (4).

3. Compresseur de réfrigérant selon l'une des revendications 1 ou 2, **caractérisé en ce que** la partie de fixation (9) du réceptacle à lubrifiant en forme de douille (8) est fixée de façon solidaire en rotation entre le rotor (4) et le vilebrequin (1).

4. Compresseur de réfrigérant selon l'une des revendications 1 à 3, **caractérisé en ce qu'**un chevauchement du rotor (4) et de la partie de fixation (9) dans le sens axial par rapport à l'axe longitudinal (2) représente plus de 50 %, de préférence plus de 75 %, en particulier entre 75 % et 100 % de l'étendue axiale de la partie de fixation (9) par rapport à l'axe longitudinal (2).

5. Compresseur de réfrigérant selon l'une des revendications 1 à 4, **caractérisé en ce que** la partie de collet (11) repose sur le rotor (4).

6. Compresseur de réfrigérant selon l'une des revendications 1 à 5, **caractérisé en ce que** la partie de fixation (9) du réceptacle à lubrifiant en forme de douille (8) présente au moins un dégagement en forme de fente qui s'étend de préférence sur toute l'étendue de la partie de fixation (9) parallèlement à l'axe longitudinal (2), le rotor (4) présentant au moins une nervure correspondant au dégagement.

7. Compresseur de réfrigérant selon l'une des revendications 1 à 6, **caractérisé en ce que** l'unité d'entraînement électrique est conformée comme un moteur à rotor externe et le rotor (4) présente un élément de support (12) qui s'étend au moins par sections vers l'extérieur dans le sens radial par rapport à l'axe longitudinal (2), l'élément de support (12) étant relié de façon solidaire en rotation au vilebrequin (1).

8. Compresseur de réfrigérant selon la revendication 7, **caractérisé en ce que** l'élément de support (12) présente une ouverture de passage (13) centrée pour la liaison du vilebrequin (1), une surface extérieure de la partie de fixation (9) du réceptacle à lubrifiant en forme de douille (8) venant en contact avec une partie de paroi de l'ouverture de passage (13).

9. Compresseur de réfrigérant selon la revendication 8, **caractérisé en ce que** l'ouverture de passage (13) est formée par une saillie en forme de douille (12a) de l'élément de support (12)
et **en ce qu'**un élément d'appui annulaire (30) est calé à la presse ou fretté sur la saillie en forme de douille (12a).

10. Compresseur de réfrigérant selon l'une des revendications 1 à 6, **caractérisé en ce que** l'unité d'entraînement électrique est conformée comme un moteur à rotor interne et le rotor (4) présente une ouverture de passage (13) centrée en vue de la liaison du vilebrequin (1), une surface extérieure de la partie de fixation (9) du réceptacle à lubrifiant en forme de douille (8) venant en contact avec une surface de paroi de l'ouverture de passage (13).

11. Compresseur de réfrigérant selon l'une des revendications 1 à 10, **caractérisé en ce qu'**est formé à l'intérieur du réceptacle à lubrifiant en forme de douille (8) un entraîneur de lubrifiant (16), l'entraîneur de lubrifiant (16) et le réceptacle à lubrifiant (8) étant de préférence formés d'une seule pièce.
